## Europäisches Patentamt

## European Patent Office

## Office européen des brevets

(11) Publication number: **0 183 520**
**B1**

(12) **EUROPEAN PATENT SPECIFICATION**

(45) Date of publication of patent specification: **04.04.90**

(51) Int. Cl.⁵: **H 01 Q 1/32, H 04 B 7/08**

(21) Application number: **85308571.0**

(22) Date of filing: **26.11.85**

(54) Automotive antenna system.

(30) Priority: **27.11.84 JP 251242/84**

(43) Date of publication of application:
**04.06.86 Bulletin 86/23**

(45) Publication of the grant of the patent:
**04.04.90 Bulletin 90/14**

(84) Designated Contracting States:
**AT CH DE FR GB LI SE**

(56) References cited:
**EP-A-0 023 948**
**DE-A-1 949 828**

**PATENT ABSTRACTS OF JAPAN, vol. 7, no. 65
(E-165)1210r, 18th March 1983; & JP-A-57 212
803 (MATSUSHITA DENKI SANGYO K.K.) 27-12-
1982**

**PATENT ABSTRACTS OF JAPAN, vol. 7, no. 162
(E-187)1307r, 15th July 1983; & JP-A-58 70640
(TOYOTA JIDOSHA KOGYO K.K.) 27-04-1983**

(73) Proprietor: **TOYOTA JIDOSHA KABUSHIKI
KAISHA
1, Toyota-cho Toyota-shi
Aichi-ken 471 (JP)**

(72) Inventor: **Ohe, Junzo
15303 Daini-ekaku Apt.
2-56 Ekakushin-machi Toyota Aichi (JP)**
Inventor: **Kondo, Hiroshi
6-49 Nitamata Onishi-cho
Okazaki Aichi (JP)**

(74) Representative: **Wood, Anthony Charles
Urquhart-Dykes & Lord 91 Wimpole Street
London W1M 8AH (GB)**

(56) References cited:
**PATENT ABSTRACTS OF JAPAN, vol. 6, no. 37
(E-97)915r, 6th March 1982; & JP-A-56 156 030
(NISSAN JIDOSHA K.K.) 02-12-1981**

Courier Press, Leamington Spa, England.

## Description

The present invention relates to space diversity automobile antenna systems.

It is difficult to receive broadcast radio frequency signals steadily in a moving automobile at all times. FM broadcast signals in the VHF frequency band, i.e. above 50 MHz, have a strong tendency to propagate in straight lines. Direct waves tend to interfere with waves reflected by buildings or mountains to create multi-path noise.

An automobile antenna system for diversity reception has been proposed to improve the directional pattern and to reduce the multi-path noise such that r.f. signals can be received at all times irrespective of the orientation of the vehicle body relative to the incoming signal. Such an automobile antenna system comprises two pole antennas having different directivities and separately mounted on the vehicle body. The output from each of the pole antennas is selectively supplied to the input of a high-frequency amplifier. This high-frequency amplifier has its output stage connected to an intermediate amplifier which in turn is adapted to generate a voltage proportional to the electric field intensity of the signal received by that pole antenna. These voltages are compared so as to permit a determination to be made as to which one of the two pole antennas is currently receiving a greater electric field intensity of the desired signal with less multi-path noise disturbance.

In that prior art system utilizing two directional pole antennas, therefore, the outputs of the pole antennas were selected for use both because of variations in the electric field and of the directivities of the pole antennas. Thus, the outputs of the pole antennas were frequently changed from one to another and this generated noise due to variations of S/N ratio.

It is therefore an object of the present invention to provide an improved space diversity automobile antenna system.

Documents JP—A—57212803; JP—A—5870640; and JP—A—56156030 each describe a space diversity automobile antenna system comprising:

a plurality of antenna means associated with the automobile to detect broadcast radio frequency signals, at a frequency above 50 MHz, and to provide signals; and

a diversity reception circuit operable in response to a change in the level of a said output signal to select one of said output signals for use.

The present invention is characterized in that:

each said antenna means comprises a pair of pick-ups and combining means to combine signals from the two pick-ups to provide a said output signal;

one said pair of pick-ups being disposed at the left side and the other said pair of pick-ups being disposed at the right side of the automobile body;

the two pick-ups of each said pair of pick-ups being mounted in association respectively with a front pillar and a hinge bracket for the trunk lid on the pertinent side of the automobile body; and

each said pick-up comprising a casing having an opening and a loop antenna disposed within the casing with a side thereof exposed through said opening to extend closely adjacent to a surface portion of a said pillar or a said hinge bracket to detect radio frequency surface currents induced in the automobile body by the broadcast radio frequency signals and having a concentrated flow along each said surface portion.

It is found that each said pair of pick-ups has an approximately non-directional reception pattern and accordingly the frequency of changes in selection, by the diversity reception circuit, between the outputs of the two pick-up pairs, is reduced, thereby reducing noise in the ultimate selected signal due to differences in the S/N ratio between the two antenna output signals.

Document DE—A—1949828 describes an automobile antenna system comprising an uncased elongate loop antenna disposed on the outside and lengthwise of a hollow pillar of the automobile body to detect r.f. surface currents induced in the pillar by broadcast r.f. signals, but that system is not adapted for reception of FM signals.

The structures shown in Figures 2 and 3 hereof are also shown in Figures 2 and 3 of our co-pending European Patent Application under publication No. EP—A—182497.

The structure shown in Figure 4 hereof is also shown in Figure 1 of our co-pending European Patent Application under publication No. EP—A—187446.

Documents EP—A—182497 and EP—A—187446 are documents of the type mentioned in Article 54(3) of the European Patents Convention.

An embodiment of the invention will now be described, by way of example only, with reference to the accompanying drawings, in which:

Figure 1 illustrates a front pillar in which is mounted one pick-up of a pair of high-frequency pick-ups used in a diversity reception type automobile antenna system according to the present invention.

Figure 2 is a cross-sectional view of the front pillar shown in Figure 1, in which an electromagnetic coupling type high-frequency pick-up is mounted.

Figure 3 is a longitudinal section of the primary parts of the front pillar shown in Figure 2.

Figure 4 is a cross-sectional view of the primary parts of a trunk hinge bracket on which the other high-frequency pick-up of the pair is mounted.

Figure 5 is a schematic and perspective view of the trunk hinge bracket of Figure 4 on which the pick-up is mounted.

Figure 6 is a circuit diagram of an automobile antenna system according to the present invention.

Figure 7 illustrates the directional pattern of the high-frequency pick-up mounted in the front pillar.

Figure 8 is a view similar to Figure 7, showing the directional pattern of the high-frequency pick-up mounted on the trunk hinge.

Figures 9 and 10 illustrate the directional pattern of an antenna means comprising the two high-frequency pick-ups.

Figure 11 illustrates surface currents I induced on a vehicle body B by external waves W.

Figure 12 illustrates a probe and its processing circuit used to determine the distribution of surface currents on the vehicle body, the probe being constructed and functioning in accordance with the same principle as that of a high-frequency pick-up used in the present invention.

Figure 13 illustrates the electromagnetic coupling between the surface currents I and a pick-up loop antenna.

Figure 14 illustrates the directional pattern of the loop antenna shown in Figure 13.

Figure 15 illustrates the distribution of surface current intensity over the vehicle body.

Figure 16 illustrates the orientation of the surface currents on the vehicle body.

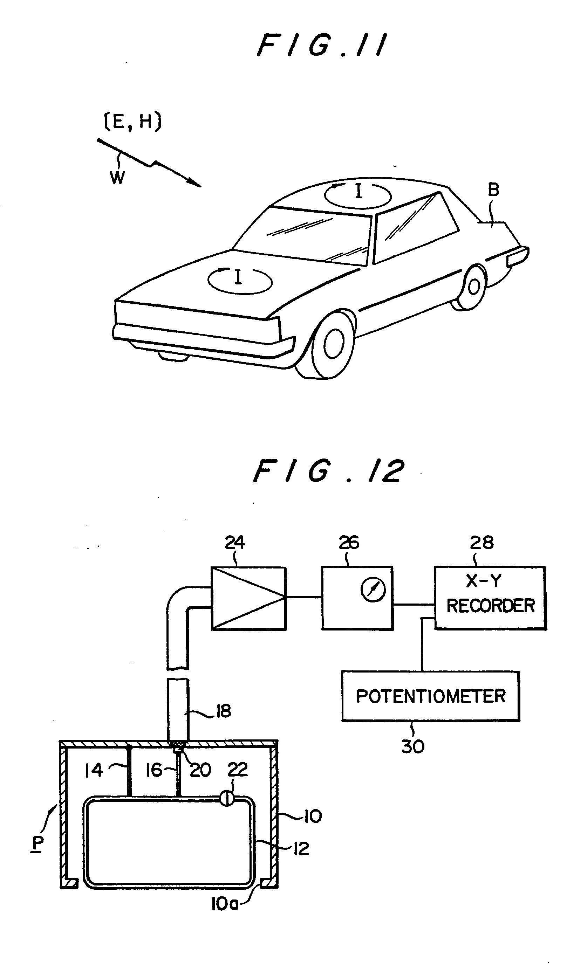

Referring first to Figures 11 to 16, there is illustrated a process of measuring the distribution of high-frequency currents on the vehicle body to determine locations at which an automobile antenna pick-up used in the present invention can operate with the greatest efficiency.

Figure 11 shows that when radio frequency waves W pass through a vehicle body B of conductive metal, surface currents I having an intensity corresponding to that of the waves are induced on the vehicle body at various locations. The present invention is intended to receive radio frequency waves belonging to the relatively high frequency band equal to or higher than 50 MHz.

The distribution of surface currents may be determined by simulation utilizing a computer and by actually measuring the intensity of current at each of the locations on the vehicle body. The measurement of current intensity may be made by a probe constructed and functioning in accordance with the same principle as that of a high-frequency pick-up which is positioned on the vehicle body at a desired location as will be described. The probe is moved over the surface of the vehicle body while being angularly rotated at each of the locations on the vehicle body.

Figure 12 shows such a probe which comprises a casing 10 of electrically conductive material and a loop coil 12 located within the casing 10 and protected from any undesirable external waves by the casing 10. The casing 10 is provided with an opening 10a through which a portion of the loop coil 12 is externally exposed. The exposed portion of the loop coil 12 is located in close proximity to the surface of the vehicle body such that the loop coil 12 can detect a magnetic flux created by the surface currents on the vehicle body. The loop coil 12 is electrically connected to the casing 10 through a short-circuiting line 14 and has an output terminal 16 electrically connected to a core 20 in a coaxial cable 18. The loop coil 12 includes a capacitor 22 for causing the frequency of the loop coil 12 to resonate at a desired frequency to be measured to improve the efficiency of picking-up.

As seen from Figure 12, the output of the probe P is amplified by a high-frequency voltage amplifier 24 the output voltage of which in turn is measured by a high-frequency voltage measuring device 26. The amplified output voltage is then recorded by an X—Y recorder 28 as a signal indicative of the current intensity at each of the locations on the vehicle body. The X—Y recorder 28 also receives a signal indicative of each of the locations on the vehicle body from a potentiometer 30. Therefore, one can determine the intensity of surface currents at each location on the vehicle body.

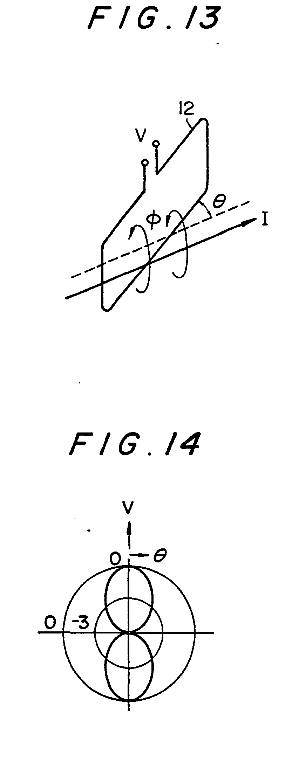

Figure 13 shows a deviation θ between the surface high-frequency currents I and the loop coil 12 of said probe. As seen from this figure, a magnetic flux θ formed by the surface currents I intersects the loop coil 12 to create a voltage V to be detected therein. As seen from Figure 14, the voltage is maximum when the deviation θ is equal to zero, that is, when the surface currents I flow parallel to the loop coil 12 of the probe. Therefore, the direction of the flowing currents I can be determined when the probe P is angularly rotated to obtain the maximum voltage at each of the locations on the vehicle body.

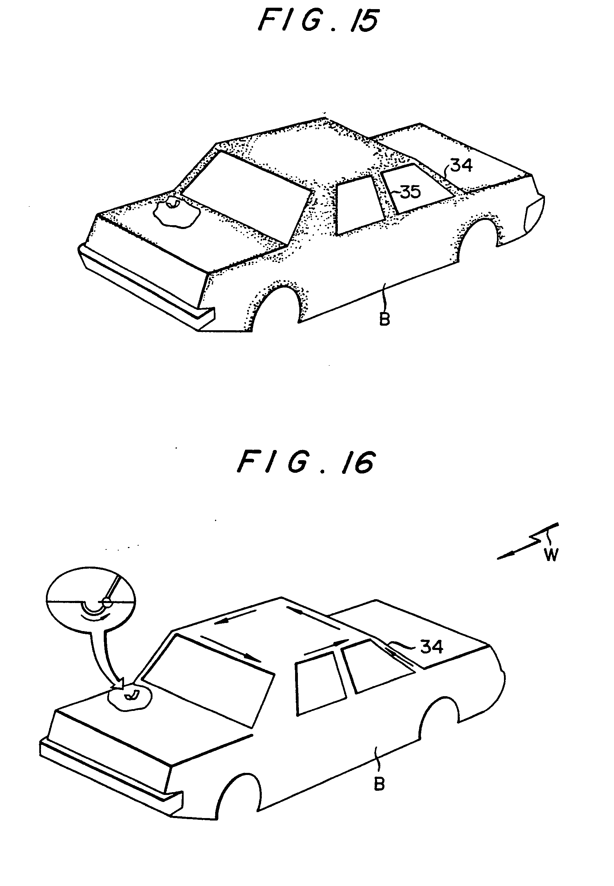

Figures 15 and 16 respectively illustrate the magnitude and orientation of surface high-frequency currents which are induced on the vehicle body at various locations by radio frequency waves having a frequency equal to 80 MHz and determined by simulation by the computer and the actual measurements by the probe P. As seen from Figure 15, the density of the surface currents is higher along the marginal edges of the flat vehicle portions and minimum at the center of each of the flat vehicle portions. It will further be understood from Figure 16 that the surface currents have a concentrated flow along the marginal edge portions of the vehicle body including the connections between the flat vehicle portions.

This means that the surface currents have a concentrated flow along the front pillars, the trunk lid hinge brackets and the marginal edge portions of the engine hood and trunk lid.

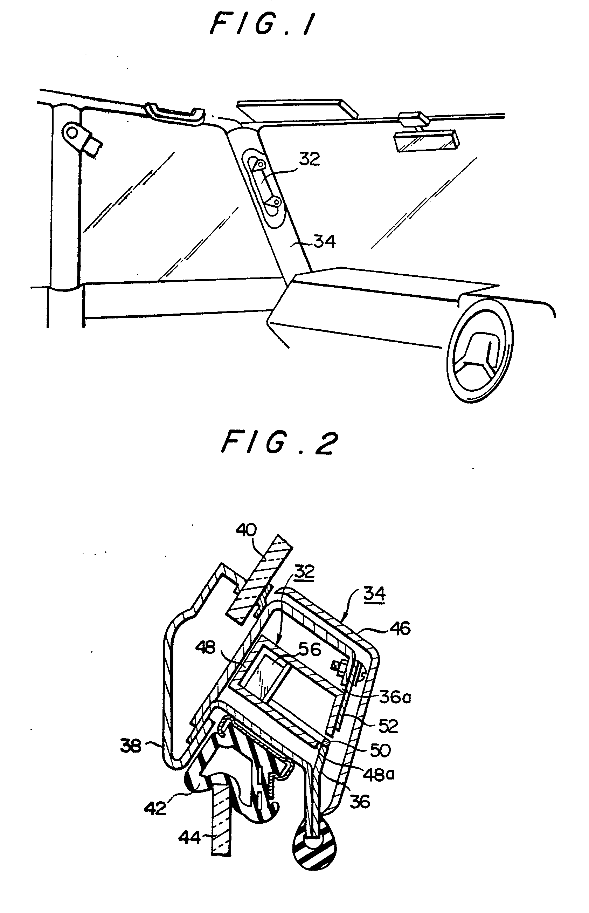

Referring now to Figure 1, there is shown a high-frequency pick-up 32, being one of a pair of pick-ups forming an antenna means, and which is mounted in one of the front pillars 34 on the vehicle body. In the illustrated embodiment, the high-frequency pick-up 32 is in the form of an electromagnetic coupling type pick-up including a loop antenna.

As seen from Figure 2, the front pillar 34 includes a pillar leg plate 36 which is in the form of a hollow quadrilateral column. The outer wall of the pillar leg plate 36 fixedly supports a windshield molding 38 which in turn supports a windshield glass 40.

A weather strip 42 of rubber is fixedly mounted on the rearward side of the pillar leg plate 36 and serves as a sealing element between the pillar leg plate 36 and a side window glass 44.

The inner wall of the pillar leg plate 36 facing the interior of the passenger compartment is covered by a front pillar garnish 46 to provide an aesthetic appearance for the front pillar.

The high-frequency pick-up 32 is disposed in the hollow interior of the pillar leg plate 36 parallel to the length of the front pillar 34.

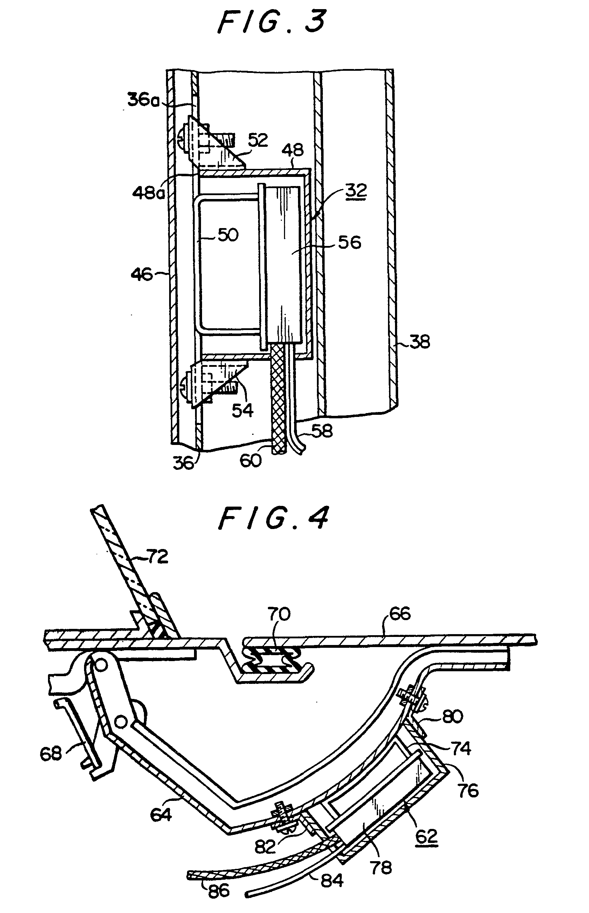

As seen from Figures 2 and 3, the high-frequency pick-up 32 comprises a casing 48 of electrically conductive material and a loop antenna 50 located within the casing 48 and shielded from any external magnetic field by the casing 48. The casing 48 is provided with an opening 48a through which a portion of the loop antenna 50 is externally exposed. The exposed portion of the loop antenna 50 is disposed in close proximity to the front pillar and particularly the pillar leg plate 36 on which the surface high-frequency currents have a concentrated flow.

In the present embodiment, the pillar leg plate 36 is provided with an opening 36a through which the high-frequency pick-up 32 can be inserted into the hollow column of the pillar leg plate 36 before the front pillar garnish 46 is mounted on the pillar leg plate 36.

The casing 48 includes brackets 52 and 54 fixedly mounted on the opposite ends thereof as by spot-welding. As shown, these brackets 52 and 54 are rigidly fastened to the pillar leg plate 36 as by screws to fixedly mount the casing 48 of the high-frequency pick-up 32 on the pillar leg plate 36.

When the high-frequency pick-up 32 is thus mounted within the pillar leg plate 36, one side of the loop antenna 50 thereof is disposed in close proximity to the edge of the opening 36a of the pillar leg plate 36, as shown in Figure 2, so that the loop antenna 50 will efficiently be intersected by the magnetic flux created by the surface high-frequency currents flowing concentratedly in the pillar leg plate 36.

The casing 48 also contains a circuit section 56 including a pre-amplifier, which is located behind the loop antenna 50. The circuit section 56 is supplied with power and control signals through a cable 58. High-frequency signals detected by the loop antenna 50 are fed externally through a coaxial cable 60 and then processed by a circuit similar to that used to determine the distribution of surface currents on the vehicle body.

In the illustrated embodiment, the loop antenna 50 is in the form of a single turn coil which is covered with an electrically insulating layer such that the coil can be electrically insulated from and disposed in close proximity to the marginal edge of the pillar leg plate 36. Thus, the loop antenna 50 can efficiently intersect magnetic flux created by the surface high-frequency currents which flow concentratedly in the pillar.

After the high-frequency pick-up 32 has been mounted in the front pillar 34, the front pillar garnish 46 is mounted on the pillar 34 to provide an appearance similar to that of conventional pillar constructions.

The other high-frequency pick-up of said pair of pick-ups forming an antenna means is disposed on the trunk hinge bracket at the same side of the vehicle body as the front pillar 34 on which the above described high-frequency pick-up 32 is mounted.

Radio frequency waves belonging to the FM frequency band induce surface currents on the trunk hinge brackets of the vehicle body with densities equal to or higher than those on the other vehicle portions. This tendency is increased as the level of frequency is increased. In addition, the trunk hinge brackets are very remote from an engine which is normally located at the forward end of the vehicle body. Therefore, the high-frequency pick-up is not influenced substantially by noise from the vehicle body, to provide signals which are superior in S/N ratio.

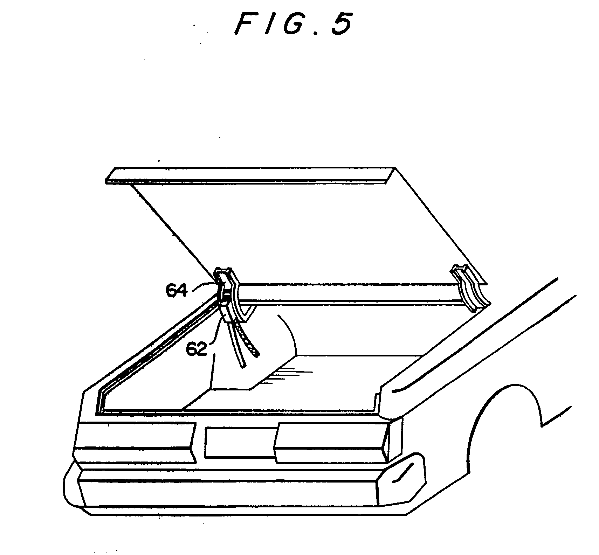

Referring now to Figures 4 and 5, there is shown one of two trunk hinge brackets 64 on which the other high-frequency pick-up 62 is mounted. Each of the trunk hinge brackets 64 is pivotally mounted at one end by the vehicle body. The other end of the trunk hinge bracket 64 is rigidly mounted on the inner wall of the trunk lid 66. The trunk hinge bracket 64 is provided with a torsion bar 68 functioning to resiliently position the trunk lid 66 in its open state. As well-known, a water-tight weather strip 70 is provided between the trunk lid 66 and the vehicle body to prevent any external water such as rain from penetrating into the interior of the vehicle body through a rear window glass 72.

In the illustrated embodiment, the high-frequency pick-up 62 is rigidly mounted on the side of the trunk hinge bracket 64 facing the trunk room. The high-frequency pick-up 62 includes a loop antenna 74 the length of which extends parallel to that of the trunk hinge bracket 64. Thus, the loop antenna 74 can positively and efficiently acquire surface currents flowing in the trunk hinge bracket 64.

The high-frequency pick-up 62 comprises a casing 76 of electrically conductive material in which said loop antenna 74 and a circuit section 78 including a pre-amplifier are housed. The casing 76 is provided with an opening toward the trunk hinge bracket 64. The casing 76 includes L-shaped fittings 80 and 82 at the opposite ends of the opening. Each of the fittings 80 and 82 is firmly screwed at one end on the trunk hinge bracket 64. Thus, the loop antenna 74 within the casing 76 can intersect only a magnetic flux created by the surface high-frequency currents flowing in the trunk hinge 64 and be positively shielded from any external flux by the casing 76.

The loop antenna 74 is preferably shaped to be compatible with the curvature of the trunk hinge bracket 64.

The circuit section 78 is supplied with power and control signals through a cable 84. High-frequency signals detected by the loop antenna 74 are fed externally through a coaxial cable 86 and then processed by a circuit similar to that used in determining the distribution of surface currents.

The loop antenna 74 is in the form of a single turn coil which is covered with an electrically insulating layer such that the coil can be electrically insulated from and disposed in close contact with the trunk hinge bracket 64. Therefore, the loop antenna can efficiently be intersected by a magnetic flux created by the surface currents.

The high-frequency pick-ups 32 and 62 respectively mounted on the front pillar 34 and trunk hinge bracket 64 are different from each other in directional pattern. However, an approximately non-directional reception pattern can be achieved by antenna means comprising these two high-frequency pick-ups 32 and 62 with a phase compensating circuit and a combining circuit which will be described.

Although not illustrated, two similar high-frequency pick-ups are also mounted respectively on the other front pillar and trunk hinge bracket at the opposite side of the vehicle body. These two high-frequency pick-ups are used to provide another such antenna means, and the two antenna means are used in a diversity reception automobile antenna system according to the present invention.

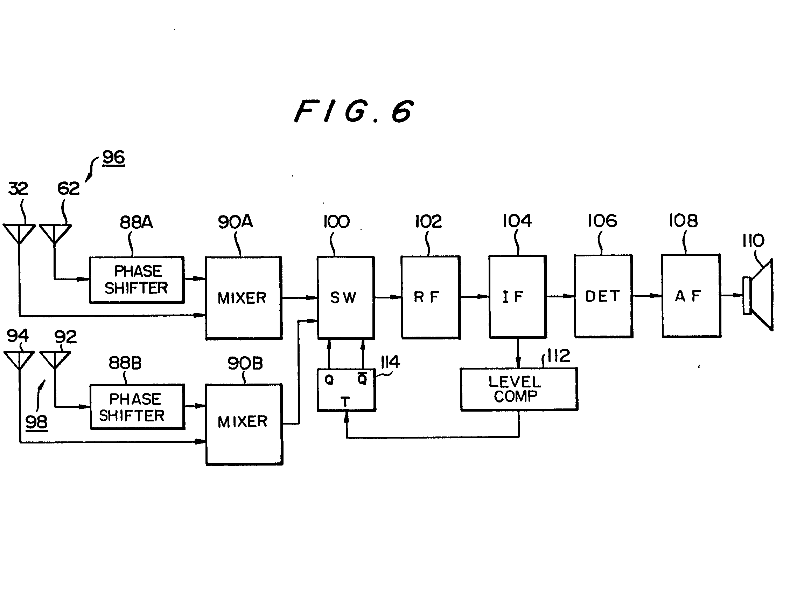

The output signals from the two antenna means thus formed are subject to selection by a circuitry as shown in Figure 6 such that good reception can be maintained.

As shown in Figure 6, the high-frequency pick-up 62 mounted on the trunk hinge bracket 64 is electrically connected to a combining circuit 90A through a phase compensating circuit 88A. The high-frequency pick-up 32 mounted on the front pillar 34 at the same side of the vehicle body as that of the trunk hinge 64 is electrically connected directly to the combining circuit 90A.

The phase compensating circuit 88A causes the phase of waves received by the high-frequency pick-up 62 having a shorter cable to match that of waves received by the high-frequency pick-up 32 having a longer cable. The combining circuit 90A serves to sum the output signals from both the high-frequency pick-ups 32 and 62.

Similarly, a high-frequency pick-up 92 mounted on the other trunk hinge bracket at the opposite side of the vehicle body also is electrically connected to a combining circuit 90B through a phase compensating circuit 88B. Another high-frequency pick-up 94 mounted on the other front pillar at the same side of the vehicle body as that of the high-frequency pick-up 92 is electrically connected directly to the combining circuit 90B.

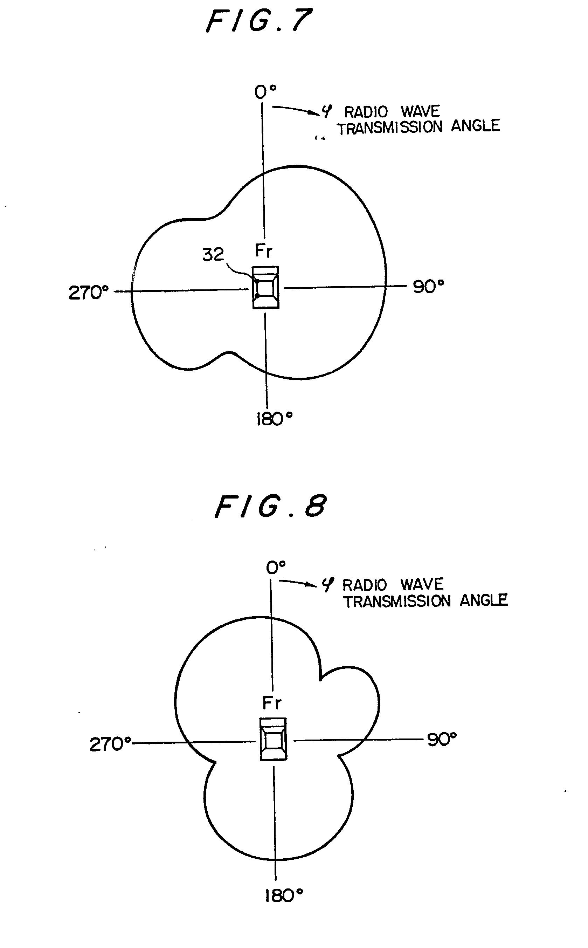

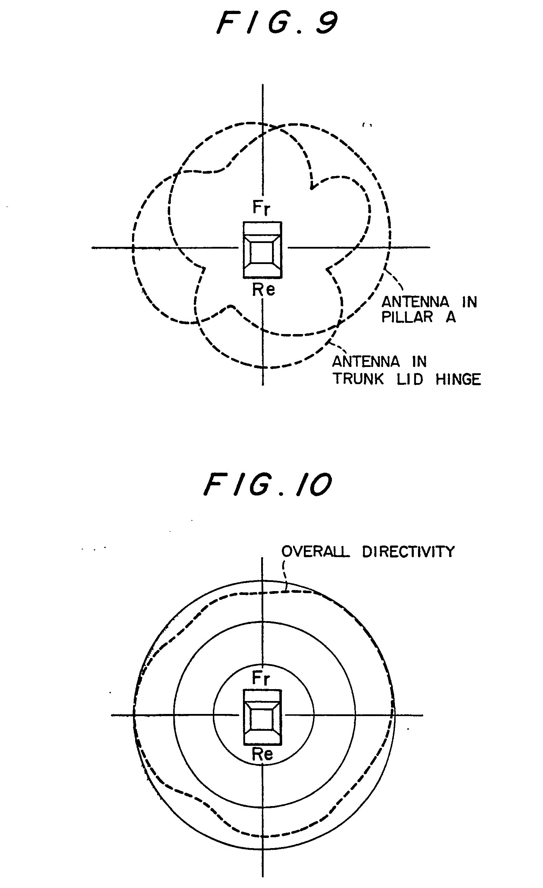

The high-frequency pick-up 32 on the front pillar 34 has a directional pattern shown in Figure 7 while the high-frequency pick-up 62 on the trunk hinge bracket 64 has a directional pattern shown in Figure 8. By combining the outputs of the high-frequency pick-ups 32 and 62 through the combining circuit 90A, the antenna means 96 provided by the high-frequency pick-ups 32 and 62 will have the approximately non-directional reception pattern shown in Figures 9 and 10. Similarly, the high-frequency pick-ups 92 and 94 on the opposite sides of the vehicle body provide an antenna means 98 having an approximately non-directional reception similar to that of Figures 9 and 10, but inverted left to right.

The outputs of the combining circuits 90A and 90B are selectively supplied to a high-frequency amplifier 102 through a switching circuit 100. The output of the high-frequency amplifier 102 is received by a detector 106 through an intermediate frequency amplifier 104 and then amplified by an audio amplifier 108. Audio signals thus amplified are reproduced by a speaker 110.

On the other hand, the output of the intermediate frequency amplifier 104 is also supplied to a level comparator 112 which is adapted to give a trigger signal to a flip-flop 114 if the output of the intermediate frequency amplifier 104 falls below a predetermined level.

When the flip-flop 114 receives a trigger signal from the level comparator 112, the output thereof is inverted to change the state of the switching contacts in the switching circuit 100 to automatically select that one of the two antenna means 96, 98 which can receive radio frequency waves more efficiently.

**Claims**

1. A space diversity automobile antenna system comprising:

a plurality of antenna means (32, 62) associated with the automobile to detect broadcast radio frequency signals, at a frequency above 50 MHz, and to provide output signals; and

a diversity reception circuit (100, 114) operable in response to a change in the level of a said output signal to select one of said output signals for use; characterized in that

each said antenna means comprises a pair of pick-ups (32, 62; 92, 94) and combining means (90A, 90B) to combine signals from the two pick-ups to provide a said output signal;

one said pair of pick-ups (32, 62) being disposed at the left side and the other said pair of pick-ups (92, 94) being disposed at the right side of the automobile body;

the two pick-ups of each said pair of pick-ups being mounted in association respectively with a front pillar (34) and a hinge bracket (64) for the trunk lid (66) on the pertinent side of the automobile body; and

each said pick-up (32, 62; 92, 94) comprising a casing (48, 76) having an opening (48a) and a loop antenna 50, 74) disposed within the casing with a side thereof exposed through said opening to extend closely adjacent to a surface portion of a said pillar (34) or a said hinge bracket (64) to detect radio frequency surface currents induced in the automobile body by the broadcast radio frequency signals and having a concentrated flow along each said surface portion.

2. A system according to claim 1 characterized in that each said pick-up (62) associated with a said trunk lid bracket (64) is mounted on that hinge bracket on the side surface thereof facing the trunk space, the exposed side of said loop antenna (74) extending parallel to the length of the bracket.

3. A system according to claim 2 characterized in that each said hinge bracket (64) is curved and the exposed side of the loop antenna (74) associated with that hinge bracket has a similar curvature.

4. A system according to any one of claims 1 to 3 characterized in that each said loop antenna (74) of a said pick-up associated with a said hinge bracket (64) comprises an electrically insulated single turn coil the electrical insulation of which is in contact with the hinge bracket.

5. A system according to any one of claims 1 to 4 characterized in that each said front pillar (34) is hollow and has an opening (36a) in a side wall (36) thereof, and each said loop antenna (50) of a said pick-up (32) associated with a said front pillar comprises an electrically insulated single turn coil, the electrical insulation of which is in contact with an edge of said pillar opening (36a).

6. A system according to any one of claims 1 to 5 characterized by a phase compensating circuit (88A, 88B) associated with each said pair of pick-ups (32, 62), each said phase compensating circuit being connected between one of the two pick-ups of a said pair and the combining means (90A, 90B) associated with that pair.

7. A system according to any one of claims 1 to 6 characterized by comparing means (112) for comparing the level of a currently selected said output signal with a predetermined threshold level and providing a switch signal when said output signal level is lower than the threshold level, said diversity reception circfuit (100, 114) being responsive to said switch signal to select the or an other of said output signals for use.

**Patentansprüche**

1. Raumdiversity-Antennensystem für ein Kraftfahrzeug mit einer Vielzahl von Antenneneinrichtungen (32, 62), die dem Kraftfahrzeug zugeordnet sind, um gesendete Hochfrequenzsignale mit einer Frequenz über 50 MHz zu erfassen und Ausgangssignale zur Verfügung zu stellen; und einer Diversity-Empfangsschaltung (100, 114), die in Abhängigkeit von einer Änderung im Niveau eines der Ausgangssignale eines dieser Ausgangssignale zur Nutzung auswählt; dadurch gekennzeichnet, daß
jede Antenneneinrichtung ein Paar von Aufnehmern (32, 62; 92, 94) und Kombinationseinrichtungen (90A, 90B) zum Kombinieren von Signalen von ben beiden Aufnehmern zur Erzeugung eines der Ausgangssignale aufweist; wobei eines der Aufnehmerpaare (32, 62) an der linken Seite und das andere Aufnehmerpaar (92, 94) an der rechten Seite der Kraftfahrzeugkarosserie angeordnet ist;

die beiden Aufnehmer eines jeden Aufnehmer paares in Zuordnung zu einem Vorderpfeiler (34) und einem Scharnierarm (64) für den Kofferraumdeckel (66) an der entsprechenden Seite der Kraftfahrzeugkarosserie montiert sind; und
jeder Aufnehmer (32, 62; 92, 94) ein Gehäuse (48, 76) mit einer Öffnung (48a) und eine im Gehäuse angeordnete Schleifenantenne (50, 74) umfaßt, von der eine Seite, die durch die Öffnung freiliegt, sich eng benachbart zu einem Oberflächenabschnitt des Pfeilers (34) oder eines Scharnierarmes (64) erstreckt, um in der Kraftfahrzeugkarosserie durch die gesendeten Hochfrequenzsignale induzierte Hochfrequenzoberflächenströme zu erfassen und einen konzentrierten Fluß entlang jedes Oberflächenabschnittes vorzusehen.

2. System nach Anspruch 1, dadurch gekennzeichnet, daß jeder einem Kofferraumdeckel-Scharnierarm (64) zugeordnete Aufnehmer (62) an diesem Scharnierarm auf der Seitenfläche desselben montiert ist, die zum Kofferraum weist, wobei sich die freiliegende Seite der Schleifenantenne (74) parallel zur Länge des Armes erstreckt.

3. System nach Anspruch 2, dadurch gekennzeichnet, daß jeder Scharnierarm (64) gekrümmt ist und daß die freiliegende Seite der diesem Scharnierarm zugeordneten Schleifenantenne (74) eine entsprechende Krümmung besitzt.

4. System nach einem der Ansprüche 1 bis 3, dadurch gekennzeichnet, daß jede Schleifenantenne (74) eines einem Scharnierarm (64) zugeordneten Aufnehmers eine elektrisch isolierte Wicklung mit einer einzigen Windung umfaßt, deren elektrische Isolierung mit dem Scharnierarm in Kontakt steht.

5. System nach einem der Ansprüche 1 bis 4, dadurch gekennzeichnet, daß jeder vorderpfeiler (34) hohl ist und in einer Seitenwand (36) eine Öffnung (36a) aufweist und daß jede Schleifenantenne (50) eines einen der Vorderpfeiler zugeordneten Aufnehmers (32) eine elektrisch isolierte Wicklung mit einer einzigen Windung besitzt, deren elektrische Isolation in Kontakt mit einem Rand der Pfeileröffnung (36a) steht.

6. System nach einem der Ansprüche 1 bis 5, gekennzeichnet durch eine Phasenkompensationsschaltung (88A, 88B), die jedem Paar von Aufnehmern (32, 62) zugeordnet ist, wobei jede Phasenkompensationsschaltung zwischen einen der beiden Aufnehmer der Paare und die diesem Paar zugeordneten Kombinationseinrichtungen (90A, 90B) geschaltet ist.

7. System nach einem der Ansprüche 1 bis 6, gekennzeichnet durch Vergleichseinrichtungen (112) zum Vergleichen des Niveaus eines momentan ausgewählten Ausgangssignales mit einem vorgegebenen Schwellenniveau und zum Vorsehen eines Schaltsignales, wenn das Ausgangssignalniveau niedriger ist als das Schwellenniveau, wobei die Diversity-Empfangsschaltung (100, 114) in Abhängigkeit von dem Schaltsignal das Ausgangssignal oder ein anderes Ausgangssignal zur Nutzung auswählt.

## Revendications

1. Un système d'antennes multiples d'automobile à diversité en espace comprenant;
plusieurs moyens d'antenne (32, 62) associés à l'automobile pour détecter les signaux de fréquence radio, à une fréquence supérieure à 50 MHz, et pour fournir des signaux de sortie; et
un circuit à réception en diversité (100, 114) susceptible de fonctionner en réponse à une modification du niveau dudit signal de sortie pour choisir un desdits signaux de sortie pour utilisation; caractérisé en ce que:
chaque dit moyen d'antenne comprend une paire de capteurs (32, 62; 92, 94) et des moyens de mélange de signaux (90A, 90B) pour combiner des signaux provenant des deux capteurs pour fournir undit signal de sortie;
unedite paire de capteurs (32, 62) étant disposée sur le côté gauche et l'autre dite paire de capteurs (92, 94) étant disposée sur le côté droit de la caisse de l'automobile;
les deux capteurs de chaque dite paire de capteurs étant montés en association respectivement sur un montant frontal (34) et un support charnière (64) de couvercle (66) du coffre sur le côté adéquat de la caisse de l'automobile; et
chaque dit capteur (32, 62; 92, 94) comprenant un boîtier (48, 76) présentant une ouverture (48a) et une antenne à boucle (50, 74), disposée à l'intérieur du boîtier, avec un côté de celle-ci exposé à travers ladite ouverture pour être disposé de façon étroitement adjacente à une partie de surface dudit montant (34) ou dudit support charnière (64), pour détecter les courants de surface de fréquence radio induits dans la caisse d'automobile par les signaux de fréquence radio et présentant un flux concentré le long de chaque dite partie de surface.

2. Un système selon la revendication 1, caractérisé en ce que chaque dit capteur (62) associé audit support charnière (64) de couvercle de coffre est monté sur ce support charnière sur sa surface latérale faisant face à l'intérieur du coffre, le côté orienté vers l'extérieur de ladite antenne à boucle (74) étant parallèle à la longueur du support.

3. Un système selon la revendication 2, caractérisé en ce que chaque dit support charnière (64) est incurvé et en ce que le côté orienté vers l'extérieur de l'antenne à boucle (74) associé à chaque support charnière présente une courbure similaire.

4. Un système selon une quelconque des revendications 1 à 3, caractérisé en ce que ladite antenne à boucle (74) dudit capteur associé audit support charnière (64) comprend une bobine à spire unique isolée électriquement, dont l'isolation électrique est placée en contact du support charnière.

5. Un système selon une quelconque des revendications 1 à 4, caractérisé en ce que chaque dit montant frontal (34) est creux et présente une ouverture (36a) dans une paroi latérale (36) de celui-ci, et en ce que chaque dite antenne à boucle (50) dudit capteur (32) associée audit montant frontal comprend une bobine à une seule spire isolée électriquement dont l'isolation électrique est placée en contact avec un bord de ladite ouverture (36a) de montant.

6. Un système selon une quelconque des revendications 1 à 5, caractérisé en ce qu'un circuit (88A, 88B) de compensation de phase est associé à chaque dite paire de capteurs (32, 62), chaque dit circuit de compensation de phase étant raccordé entre un des deux capteurs de ladite paire et le moyen de mélange de signaux (90A, 90B) associé à cette paire.

7. Un système selon une quelconque des revendications 1 à 6, caractérisé par un moyen de comparaison (112) destiné à comparer le niveau de celui desdits signaux de sortie qui est choisi à ce moment là avec un niveau seuil prédéterminé et à donner un signal de commutation lorsque ledit niveau de signal de sortie est inférieur au niveau seuil, ledit circuit de réception en diversité (100, 114) répondant audit signal de commutation pour choisir l'un ou l'autre desdits signaux de sortie pour utilisation.

# FIG.1

# FIG.2

EP 0 183 520 B1

*FIG. 3*

*FIG. 4*

2

FIG.5

# FIG. 6

96

32 62

88A PHASE SHIFTER

90A MIXER

100 SW

102 RF

104 IF

106 DET

108 AF

110

94 92

98

88B PHASE SHIFTER

90B MIXER

114 Q Q̄ T

112 LEVEL COMP

## FIG.7

0°
↙ 4 RADIO WAVE
TRANSMISSION ANGLE

32 — Fr

270° — 90°

180°

## FIG.8

0°
↙ 4 RADIO WAVE
TRANSMISSION ANGLE

Fr

270° — 90°

180°

5

## F I G . 9

Fr

Re

ANTENNA IN
PILLAR A

ANTENNA IN
TRUNK LID HINGE

## F I G . 10

OVERALL DIRECTIVITY

Fr

Re

# FIG. 11

# FIG. 12

# FIG. 13

# FIG. 14

# F I G . 15

# F I G . 16